# EUROPEAN PATENT APPLICATION

(11) **EP 3 199 498 A1**
(43) Date of publication of application: **02.08.2017**
(21) Application number: 16173936.2
(22) Date of filing: 10.06.2016
(51) Int. Cl.: C02F 9/00, C02F 1/38, C02F 1/52, C02F 1/66, C02F 1/72, C02F 1/68

(54) **METHOD OF PRODUCING HYDRAULIC FRACTURING FLUID FROM WASTEWATER OBTAINED DURING SHALE GAS EXTRACTION**

(30) Priority: 26.01.2016 PL 41591016
(71) Applicant: Politechnika Lubelska, 20-618 Lublin (PL); Uniwersytet Przyrodniczy, 20-950 Lublin (PL)
(72) Inventor: PAWLOWSKI, Lucjan, 20-710 Lublin (PL); PAWLOWSKI, Artur, 20-710 Lublin (PL); PAWLOWSKA, Malgorzata, 20-710 Lublin (PL); BARAN, Stanislaw, 20-448 Lublin (PL); ZUKOWSKA, Grazyna, 20-282 Lublin (PL); KWIATKOWSKI, Zygmunt, 21-003 Ciecierzyn (PL)
(74) Representative: Kaminski, Piotr

(57) **Abstract**

A method of producing hydraulic fracturing fluid from wastewater obtained during the shale gas extraction is disclosed wherein fresh water is added to flowback or produced water until desired salinity is achieved which is then followed by adding H₂O₂ in the amount related to BOD. CaO is used to adjust pH and then sediments are precipitated by intensively mixing them with solution of Na₂CO₃ or K₂CO₃, the precipitates are then separated in a centrifuge and solution of H₂SO₄ is added to the clarified water in order to obtain clarified solution.

## Description

The object of the invention is the method of producing hydraulic fracturing fluid from wastewater obtained during shale gas extraction.

Preparation for the extraction of shale gas, involving drilling of wells and performing hydraulic fracturing of shale deposits, requires large amounts of water. Drilling one well consumes from 470 m³ (in the case of Haynesville Shale, USA) to 2300 m³ (Eagle Ford Shale, USA) of water. A single process of hydraulic fracturing requires from 11000 m³ (Niobrara Shale, USA) to 20000 m³ (Marcellus Shale, USA) of water. Throughout the exploitation period of a wellbore, which ranges from 20 to 40 years, the fracturing process must be repeated. As a result, the total water requirement in the case of a single wellbore may be as high as 500 000 m³. Exploitation of shale gas necessitates performing numerous drillings, e.g. 15 000 well bores were made in Barnett Shale (USA) by 2010. This means that 165-300 million m³ of hydraulic fracturing fluids were introduced in a single fracturing. Consumption of such huge amounts of water negatively impacts the local water economy, both qualitatively, as large amounts of water are spent, and qualitatively, due to the infiltration of chemicals used for the preparation of fracturing fluids into the environment. In such situation, recirculation of water is extremely important for the water economy. The technologies used for this purpose, described in the patents US 5520816A, WO 2013151578A, and WO 201402883A1, are based on the desalination through membrane processes or rotary evaporators. These solutions enable to recover water of high purity; however, they are expensive and require the construction of stationary installations. Transporting water to such installations is costly. Utilizing mobile devices, which are easily assembled in the proximity of drilling location, is a better solution that would not necessitate the transportation of treated wastewater and, subsequently, recovered water. The patent US 8318027B2 presents a mobile station for the treatment of wastewater produced during shale gas extraction, involving ozonation and ultrasound radiation; however, this method only removes organic substances. On the other hand, patents US 6913251, US 6984329, US 7264747, US 7326002 present variants of the method involving initial removal of oils and electrochemical coagulation in a multi-chamber reactor.

The essence of the method enabling to produce drilling fluid from wastewater obtained from shale gas extraction is that fresh water is added to flowback or produced water and mixed until the salinity of 20 ± 5 g/l is achieved; afterwards, 30% H₂O₂ is added and intensively mixed, in the amount equalling BOD multiplied 6.4 ± 0.1 times; then CaO is added and intensively mixed until the pH = 11.15 ± 0.15 is obtained. Sediments are precipitated by intensively mixing them with 20% solution of Na₂CO₃ or K₂CO₃, most favourably added in the amount of 2 dm³ per 1 m³ of wastewater; afterwards, the precipitates are separated in a centrifuge and 30% solution of H₂SO₄ is added to the clarified water in the amount of 0.18 m³ per 1 m³ of clarified wastewater. The precipitate is separated again using known methods, preferably in a centrifuge. Sand and chemicals are added to the resultant clarified solution, according to the formula for the production of hydraulic fracturing fluid.

The beneficial effect of the method according to invention is that it allows for purification of wastewater generated in the process of extraction of shale gas, allowing the use of purified water in the location of its recovery for producing hydraulic fracturing fluid.

### Example

Flowback water in the amount of 450 m³ was mixed with 350 m³ of river water. The measured salinity equalled 18.5 g/l, whereas the BOD = 3100 mg O₂/l. Then, 30% solution of H₂O₂ was added in the amount of 8.18 m³ and mixed. Afterwards, 23.2 mg CaO was added and stirred intensively. The measured pH equalled 11.20. Then, 20% solution of Na₂CO₃ was added to the clarified solution in 0.1 m³ portions and mixed intensively, up to the total amount of 5.4 m³. The precipitate was separated in a centrifuge and then 12.97 m³ of 30% H₂SO₄ was added to the clarified water. After another stirring, the clarified solution was enriched with: 48 mg of sand, 3.24 m³ of 30% hydrofluoric acid, 7.04 mg of mineral oil, 84 kg of glutaraldehyde, 16 kg of sodium sulfate (VI), 56 kg of sodium borate, 80 kg of sodium chloride, 88 kg of potassium carbonate, 344 kg of ethylene glycol, 480 kg of potassium chloride, 680 kg of isopropanol, 16 kg of NN-dimethylformamide, 448 kg of guar gum, 120 kg of hydroxymethyl cellulose, and 32 kg of citric acid.

## Claims

1. A method of producing hydraulic fracturing fluid from wastewater obtained during the shale gas extraction, **characterized in that** fresh water is added to flowback or produced water until the salinity of 20 ± 5 g/l is achieved; afterwards 30% H₂O₂ is added and intensively mixed, in the amount equalling BOD multiplied 6.4 ± 0.1 times; then CaO is added and intensively mixed until the pH = 11.15 ± 0.15 is obtained, then sediments are precipitated by intensively mixing them with 20% solution of Na₂CO₃ or K₂CO₃, most preferably added in the amount of 2 dm³ per 1 m³ of wastewater; the precipitates are then separated in a centrifuge and 30% solution of H₂SO₄ is added to the clarified water in the amount of 0.18 m³ per 1 m³ of clarified wastewater and stirred again in order to obtain clarified solution.

2. The method of Claim 1, **characterized in that** sand and chemicals are added to the obtained clarified wastewater solution, according to the required formula for the production of hydraulic fracturing fluid.
